# EUROPÄISCHE PATENTSCHRIFT

(11) **EP 2 355 058 B1**
(45) Veröffentlichungstag und Bekanntmachung des Hinweises auf die Patenterteilung: **11.09.2013**
(21) Anmeldenummer: 10015777.5
(22) Anmeldetag: 17.12.2010
(51) Int. Cl.: G06K 19/077, G06F 21/34, G06Q 20/40, G07F 7/08

(54) **Portabler Datenträger zum Anzeigen von Transaktionsdaten**
Portable data carrier for displaying transaction data
Support de données portatif destiné à afficher des données de transaction

(30) Priorität: 09.02.2010 DE 102010007236
(43) Veröffentlichungstag der Anmeldung: 10.08.2011
(73) Patentinhaber: Giesecke & Devrient GmbH, 81677 München (DE)
(72) Erfinder: Schedel, Ralf, 82319 Starnberg (DE); Sexl, Markus, Dr., 82065 Baierbrunn (DE); Kalman, Cinkler, Dr., 80797 München (DE)

(56) Entgegenhaltungen:
- DE-A1-102005 039 319
- US-A1- 2005 067 485
- US-A1- 2009 159 663
- Wikipedia: "Binäre Uhr", , 1. Januar 2010 (2010-01-01), XP55011322, Gefunden im Internet: URL:http://de.wikipedia.org/w/index.php?ti tle=Bin%C3%A4re_Uhr&oldid=68668474 [gefunden am 2011-11-07]

## Beschreibung

Die vorliegende Erfindung betrifft ein Verfahren und einen portablen Datenträger zum Anzeigen von Transaktionsdaten sowie ein Transaktionssystem mit einem solchen Datenträger.

Zum Authentisieren oder Freigeben von elektronischen Transaktionen, beispielsweise Bezahltransaktionen, sind für gewöhnlich spezielle Transaktionsdaten vorgesehen, wie z.B. persönliche Identifikationsnummern (PINs), Transaktionsnummern (TANs), Einmalpasswörter (OTPs) oder dergleichen. Zum Erzeugen oder sicheren Speichern dieser Transaktionsaktionsdaten sowie insbesondere zum Anzeigen derselben zur Verwendung während der Transaktion sind portable Datenträger, insbesondere Chipkarten, bekannt. Diese umfassen in der Regel ein mehrsegmentiges Display, welches geeignet ist, entsprechende Transaktionsdaten auf Anforderung anzuzeigen.

Allerdings ist die Herstellung von Chipkarten mit Display recht aufwändig, insbesondere aufgrund der Komplexität des Displays sowie der Integration desselben in den Kartenaufbau. Bekannte Heißlaminiertechniken, wie sie zur Herstellung gewöhnlicher Chipkarten ohne Display bekannt sind, bei denen mehrere Materialschichten unter vergleichsweise hohen Temperaturen und hohem Druck miteinander verbunden werden, sind hier meist nicht anwendbar, da die verwendete Displaytechnologie sehr empfindlich auf solche Verarbeitungsumgebungen reagiert. Die EP 1054 244 A2 offenbart die Herstellung eines Halbzeugs, welches geeignet ist, eine Anzeigefunktion mit der bekannten Heißlaminiertechnik für portable Datenträger bereitzustellen.

Die EP 1 919 714 B1 beschreibt eine Chipkarte mit einer Lichtquelle, beispielsweise einer Leuchtdiode, die ein optisches Hervorheben verschiedener graphischer Elemente der Chipkarte ermöglicht. Auf diese Weise kann die Chipkarte mit einem markanten, wieder erkennbaren Äußeren ausgestattet werden. Bekannte Anwendungen solcher Karten sind beispielsweise Geschenkkarten, Spaßartikel oder dergleichen. Auf einem Display der Karte aus US 2009/0159663 A1 wird eine dynamische Kreditkartennummer angezeigt, wobei die Karte einen Tastendruck des Benutzers durch Aufleuchten einer LED bestätigt. US 2005 0067485 A1 zeigt den Oberbegriff von Anspruch 1.

Aufgabe der vorliegenden Erfindung ist es, auf einfache und kostengünstige Weise das Anzeigen allgemeiner Transaktionsdaten zu ermöglichen.

Diese Aufgabe wird durch einen portablen Datenträger, ein Verfahren sowie ein Transaktionssystem mit den Merkmalen der nebengeordneten Ansprüche gelöst. Vorteilhafte Ausgestaltungen und Weiterbildungen sind in den abhängigen Ansprüchen angegeben.

Ein erfindungsgemäßer portabler Datenträger zum Anzeigen von Transaktionsdaten besitzt ein verschiedene Zeichen umfassendes Zeichenfeld. Jedem Zeichen des Zeichenfeldes ist ein optisch hervorhebbares Markierungselement des Datenträgers individuell zugeordnet. Der Datenträger ist erfindungsgemäß eingerichtet, die Transaktionsdaten dadurch anzuzeigen, dass Zeichen des Zeichenfeldes durch optisches Hervorheben des jeweils zugeordneten Markierungselements gemäß einer vorgegebenen Kodierung angezeigt werden. Der Datenträger setzt die vorgegebene Kodierung also dadurch um, dass die anzuzeigenden Transaktionsdaten durch Anzeigen einer den kodierten Transaktionsdaten entsprechenden Zeichenfolge durch geeignetes optisches Hervorheben der jeweils zugeordneten Markierungselemente kodiert angezeigt werden. Die Anzeige dieser Zeichenfolge erfolg dabei derart, dass ein Nutzer des Datenträgers die Transaktionsdaten daraus ableiten oder dekodieren kann.

Ein solcher Datenträger ist einfach und kostengünstig herzustellen. Ein herkömmliches Display ist verzichtbar. Daher entfällt der Aufwand zum Herstellen des Displays und zu dessen Integration in den Datenträger. Alle zum Kodieren der Transaktionsdaten benötigten Zeichen können als Zeichen des Zeichenfeldes bereitgestellt werden. Dieses Zeichenfeld kann auf bekannte, einfache Weise bereitgestellt werden, beispielsweise auf eine Datenträgeroberfläche aufgedruckt werden oder in dieselbe mittels Laser eingeschrieben oder eingeprägt werden. Die Markierungselemente können mittels einfacher elektronischer Bauteile bereitgestellt werden, beispielsweise - wie nachstehend genauer beschrieben - mittels Leuchtdioden. Solche Bauteile sind robust und auf einfache Weise unter Verwendung herkömmlicher Produktionsverfahren, beispielsweise Heißlaminierverfahren, in entsprechende Datenträger, insbesondere Chipkarten, zu integrieren. Auch die Verdrahtung und Ansteuerung solcher Bauteile erfordert keinen besonderen technischen Aufwand. Die Markierungselemente sind dabei den entsprechenden Zeichen des Zeichenfeldes beispielsweise dadurch zugeordnet, dass sie im Datenträger räumlich benachbart zu diesen angeordnet sind.

Gleichzeitig wird durch den erfindungsgemäßen Datenträger die Kodierung beliebiger Transaktionsdaten auf einfache Weise möglich, ohne dass eine Einschränkung des verwendbaren Zeichenraums bzw. Zeichenalphabets oder dergleichen besteht. Solange die Zeichen des Zeichenfeldes alle potentiell zur Kodierung von Transaktionsdaten erforderlichen Zeichen bereitstellen, können mittels des erfindungsgemäßen Datenträgers auch alle möglichen solcher Transaktionsdaten, inklusive beliebiger Zeichenwiederholungen, angezeigt werden. Die Art der Kodierung von Transaktionsdaten sowie die Art der Transaktionsdaten selbst kann dabei variieren. Der erfindungsgemäße Datenträger ist somit breit und universell zum Anzeigen beliebiger Transaktionsdaten einsetzbar.

Vorzugsweise ist der erfindungsgemäße Datenträger als Chipkarte ausgebildet. Dabei sind Chipkarten verschiedener Formfaktoren und mit verschiedenem Aufbau und verschiedener sonstiger Ausstattung möglich, wie auch Datenträger gänzlich anderer Bauformen.

Gemäß einem erfindungsgemäßen Verfahren zum Anzeigen von Transaktionsdaten mittels eines erfindungsgemäßen portablen Datenträgers werden demnach Transaktionsdaten dadurch angezeigt, dass Zeichen des Zeichenfeldes durch optisches Hervorheben des jeweils zugeordneten Markierungselements gemäß einer vorgegebenen Kodierung angezeigt werden. D.h. zum Kodieren von anzuzeigenden Transaktionsdaten werden Zeichen des Zeichenfeldes des Datenträgers dadurch angezeigt, dass diesen Zeichen jeweils zugeordnete, optisch hervorhebbare Markierungselemente des Datenträgers optisch hervorgehoben werden.

Anzuzeigende Transaktionsdaten können dabei, wie erwähnt, auf verschiedene Weise kodiert werden. In der Regel können anzuzeigende Transaktionsdaten als eine Zeichenkette über dem durch die Zeichen des Zeichenfeldes gebildeten Alphabet dargestellt werden. Eine solche Zeichenkette ist in der Regel relativ kurz ist, beispielsweise vier, sechs oder acht Stellen. Eine einfache, erste Art der Kodierung einer solchen Transaktionsdatenzeichenkette besteht darin, die entsprechenden Zeichen - in der durch die anzuzeigenden Zeichenkette vorgegebenen Reihenfolge - nacheinander in der vorstehend beschriebenen Weise durch den Datenträger anzuzeigen.

Um das erste Zeichen der Zeichenkette anzuzeigen, wird dasjenige Markierungselement, welches dem entsprechenden Zeichen des Zeichenfeldes des Datenträgers zugeordnet ist, optisch hervorgehoben. Die restlichen Markierungselemente verbleiben dabei in nicht hervorgehobenem Zustand. Der Effekt des Hervorhebens kann dadurch verstärkt werden, dass das Hervorheben in kurzen Abständen einige Male an- und abgeschaltet wird, wodurch ein Blinkeffekt entsteht. Alternativ oder zusätzlich ist es möglich, das Hervorheben für längere Zeit, beispielsweise einige Sekunden, aufrechtzuerhalten. Auf die beschriebene Weise kann das Anzeigen des ersten Zeichens der Transaktionsdaten von einem Nutzer klar und eindeutig zur Kenntnis genommen werden. Der Datenträger ist dementsprechend eingerichtet, ein sowohl "blinkendes", d.h. abwechselnd an- und ausgeschaltes Hervorheben sowie ein zumindest temporär dauerhaftes Hervorheben verschiedener beliebiger Markierungselemente zu bewirken.

Das Anzeigen des zweiten und aller weiterer Zeichen wird analog durchgeführt. Wird ein Anzeigen eines Zeichens in der beschriebenen Art, also erst durch blinkende Hervorhebung und abschließend durch andauernde Hervorhebung, durchgeführt, können auch Transaktionsdaten mit Zeichenwiederholungen problemlos angezeigt werden. Allgemein werden die Transaktionsdaten also dadurch kodiert, dass die entsprechenden Zeichen des Zeichenfeldes mittels der diesen jeweils zugeordneten Markierungselemente des Datenträgers sequentiell, temporär optisch hervorgehoben werden. Es kann gleichfalls vorgesehen sein, verschiedene Markierungselemente gleichzeitig hervorzuheben, wenn eine entsprechende Kodierung dies erlaubt oder erfordert. Nachfolgend sind Beispiele dieser Art beschrieben. Demnach ist der Datenträger eingerichtet, beliebige Teilmengen der Markierungselemente gleichzeitig optisch hervorzuheben.

Ein Nutzer kennt in der Regel die Anzahl der Stellen anzuzeigender Transaktionsdaten, so dass er während des Anzeigeverfahrens erkennt, welches das letzte Zeichen der Transaktionsdaten ist. Zusätzlich kann ein Ende in beschriebener Weise angezeigter Transaktionsdaten aber auch unterstützend in geeigneter Weise angezeigt werden, beispielsweise, indem kurzzeitig alle Markierungselemente hervorgehoben werden oder indem zwischen dem Hervorheben von Markierungselementen zu einer Transaktionsdatenzeichenkette eine längere Pause entsteht, in der keine Markierungselemente hervorgehoben werden. Anschließend kann, beispielsweise zu Kontrollzwecken, die Anzeige der Transaktionsdaten, identisch oder in leicht verkürzter Weise, wiederholt werden. Zur verkürzten Anzeige kann z.B. die Anzahl der Wiederholungen bei einer "blinkenden" Anzeige eines Zeichens reduziert werden oder die Zeit eines andauernden Hervorhebens eines Markierungselements verkürzt, beispielsweise halbiert, werden.

Gemäß einer bevorzugten Ausführungsform umfasst der erfindungsgemäße Datenträger eine Schaltvorrichtung bzw. Steuervorrichtung. Diese kann dazu dienen, den Datenträger zu aktivieren. Alternativ oder zusätzlich kann die Schalt- oder Steuervorrichtung dazu dienen, dem Nutzer zu erlauben, die Anzeige der Transaktionsdaten zu steuern. Dies kann beispielsweise dadurch geschehen, dass der Nutzer, während ein Zeichen der Transaktionsdaten in der vorstehend beschriebenen Weise angezeigt wird, die Schalvorrichtung betätigt, wodurch der Datenträger direkt mit der Anzeige des nächsten Zeichens der Transaktionsdaten beginnt. Auf diese Weise kann der Vorgang des Anzeigen der Transaktionsdaten nutzergesteuert verkürzt werden, indem dieser durch geeignete Bedienung der Schalteinrichtung jedes Zeichen der anzuzeigenden Transaktionsdaten nur kurz zur Anzeige kommen lässt. Auf der anderen Seite kann ein Anzeigen der Transaktionsdaten auch derart erfolgen, dass mit dem Anzeigen des jeweils nächsten Zeichens erst dann begonnen wird, wenn der Nutzer die Schaltvorrichtung betätigt hat. Auf diese Weise wird beispielsweise verhindert, dass dem Nutzer die Anzeige eines Zeichens aus Unachtsamkeit entgeht, da weitere Zeichen nicht nach einiger Zeit automatisch, sondern stets nur auf Anforderung, d.h. nach Betätigung der Schaltvorrichtung, angezeigt werden. Die Schaltvorrichtung kann beispielsweise in Form einer Schnappscheibe oder dergleichen ausgebildet sein.

Gemäß einer bevorzugten Ausführungsform der Erfindung umfasst der Datenträger Leuchtdioden, welche eingerichtet sind, die Markierungselemente optisch hervorzuheben. Die Leuchtdioden sind dazu in einen Datenträgerkörper des Datenträgers derart integriert, dass von diesen emittiertes Licht an der Position eines Markierungselements von außerhalb des Datenträgers sichtbar ist. Im einfachsten Fall ist jedes Markierungselement mit einer Leuchtdiode ausgestattet, welche direkt an der Position des Markierungselements angeordnet ist. Es ist aber auch möglich, das von einer Leuchtdiode emittierte Licht mittels eines geeigneten Lichtleiters im Datenträgerkörper zu einem Markierungselement, welches nicht direkt an der Leuchtdiode angeordnet ist, zu leiten.

Zur Bereitstellung der Markierungselemente werden entsprechende Bereiche des Datenträgerkörpers bzw. der Datenträgeroberfläche für das von der entsprechenden Leuchtdiode emittierte Licht zumindest semitransparent ausgebildet. Um den Effekt des Hervorhebens entsprechender Markierungselemente zu verstärken, kann die Datenträgeroberfläche in der Umgebung eines Markierungselements, dieses quasi einschließend, opak ausgebildet sein.

Bevorzugt wird ein Markierungselement einem Zeichen des Zeichenfeldes des Datenträgers derart zugeordnet, dass das Markierungselement räumlich benachbart zu dem Zeichen an der Datenträgeroberfläche angeordnet wird, vorzugsweise direkt neben dem entsprechenden Zeichen. Es ist aber auch möglich, dass das Markierungselement an der gleichen Position wie das Zeichen selbst angeordnet ist, d.h. ein Hervorheben des Markierungselements führt zu einer Beleuchtung des Zeichens aus dem Datenträgerkörper heraus. In der Regel ist eine solche Beleuchtung aber nicht erforderlich. Ein Hervorheben eines Markierungselements dient erfindungsgemäß dazu, das dem Markierungselement zugeordnete Zeichen auszuwählen und dadurch anzuzeigen. Andere Arten des optischen Hervorhebens von Markierungselementen sind denkbar, beispielsweise indem die Markierungselemente als Bereiche mit - zumindest im Durchlicht - erkennbar veränderbarer Transparenz ausgebildet sind.

Es ist möglich, zum optischen Hervorheben eines Markierungselements mehrere Leuchtdioden vorzusehen. Gleichfalls kann es sinnvoll sein, lediglich eine Leuchtdiode vorzusehen, um eine Mehrzahl von Markierungselementen hervorheben zu können. Diese Ausführungsformen sind insbesondere vorteilhaft, wenn Leuchtdioden bereitgestellt werden, die jeweils verschiedenfarbiges Licht emittieren.

Im ersten Fall kann eine Kodierung der Transaktionsdaten, abweichend von vorstehend dargestelltem, dadurch erfolgen, dass mehrere Zeichen des Zeichenfeldes - gegebenenfalls sogar gleichzeitig - in verschiedenen Farben hervorgehoben werden. Dazu wird zum Hervorheben der entsprechenden Markierungselemente jeweils die dort angeordnete Leuchtdiode der gewünschten Farbe aktiviert. Eine solche Farbkodierung, die dem Nutzer des Datenträgers in der Regel bekannt ist, kann eine Positionsinformation derart enthalten, dass z.B. das Hervorheben in einer ersten Farbe, beispielsweise "rot", anzeigt, dass dieses Zeichen, unabhängig von seiner Position im Zeichenfeld, das erste Zeichen der anzuzeigenden Transaktionsdaten darstellt. In analoger Weise kann der farbigen Anzeige beispielsweise - gemäß dem bekannten Farbschema - entnommen werden, dass das zweite Zeichen der Transaktionsdatenzeichenkette ein "grünes" ist, das dritte ein "weißes" und das vierte ein "blaues". Gemäß der farblichen Hervorhebung entsprechender angezeigter Zeichen können die angezeigten - hier vierstelligen - Transaktionsdaten dekodiert und abgelesen werden.

Anstatt mehrere verschiedenfarbige Leuchtdioden vorzusehen, um verschiedenfarbige Effekte zu erzielen, können von Leuchtdioden zu Markierungselemente führende Lichtleiter Farbfilter umfassen, welche zum Anzeigen entsprechender Farben gesteuert werden können. Auf diese Weise ist es auch möglich, wie vorstehend angedeutet, dass lediglich eine Leuchtdiode vorgesehen ist, um ein Hervorheben mehrerer Markierungselemente zu unterstützen. Ein Markierungselement aus dieser Mehrzahl kann beispielsweise selektiert - und dadurch optisch hervorgehoben - werden, dass in dem Lichtleiter zu diesem Markierungselement ein Farbfilter geschaltet wird, während die Lichtleiter zu den anderen Markierungselementen, welche mit dieser Leuchtdiode verbunden sind, "ungefiltert" verbleiben.

Gemäß einer weiteren bevorzugten Ausführungsform der Erfindung wird zum Dekodieren der angezeigten Transaktionsdaten eine zusätzliche Dekodierungsinformation mittels einer Dekodierungsinformationseinrichtung des Datenträgers vorgegeben. Die Vorgabe einer solchen Dekodierungsinformation unterstützt - wie nachstehend beschrieben - einerseits das Kodieren der Transaktionsdaten zusätzlich - kann also prinzipiell verzichtbare, aber hilfreiche zusätzliche Kodierungsinformation bereitstellen - und macht andererseits ein Dekodieren angezeigter Transaktionsdaten für den Nutzer des Datenträgers einfacher und weniger fehlerträchtig. Weiterhin verbessert die Verwendung einer zusätzlichen Dekodierungsinformation die Möglichkeiten der Kodierung verschiedenster Transaktionsdaten, da auf diese Weise eine kompaktere und effektivere Kodierung ermöglicht wird.

Entsprechend umfasst eine erste Variante dieser Ausführungsform des erfindungsgemäßen Datenträgers eine Dekodierungsinformationseinrichtung, welche eingerichtet ist, entsprechende Dekodierungsinformation vorzugeben. Die Dekodierungsinformation kann beispielsweise optisch wahrnehmbar sein. Dazu bietet sich - wie schon zum Hervorheben der Markierungselemente - der Einsatz von Leuchtdioden an. Mittels solcher Bauteile können verschiedene Felder des Datenträgers selektiv optisch hervorgehoben werden, wodurch Dekodierungsinformation in vorgegebener Weise dargestellt wird. Alternativ oder zusätzlich kann Dekodierungsinformation auch akustisch ausgegeben werden, beispielsweise mittels eines Pieptons. Der Datenträger umfasst zum Erzeugen eines solches akustischen Signals dann entsprechende, bekannte Bauteile. Schließlich kann Dekodierungsinformation auch derart ausgegeben werden, dass sie mittels weiterer menschlicher Sinne, beispielsweise dem Tastsinn, wahrnehmbar ist. Eine Vibration des Datenträgers könnte beispielsweise als Dekodierungsinformation erkannt werden.

Wie erwähnt, erleichtert das Vorsehen einer geeignet gewählten zusätzlichen Dekodierungsinformation das Kodieren und Dekodieren der Transaktionsdaten. Gemäß einer ersten, einfachen Variante kann als Dekodierungsinformation jeweils vorgegeben werden, dass die Anzeige eines Zeichens der Transaktionsdaten erfolgt ist. Optisch kann dies beispielsweise mittels Aufleuchtens oder Blinkens eines entsprechenden Dekodierungsinformationselements angezeigt werden, akustisch durch einen kurzen Piepton, taktil durch eine einmalige Vibration des Datenträgers. Der Nutzer erkennt die Anzeige des Zeichens dadurch deutlicher und wird, falls erforderlich, an das Betätigen der vorstehend beschriebenen Schaltvorrichtung zum Anzeigen des nächsten Zeichens erinnert.

Eine bevorzugte zweite Variante stellt als Dekodierungsinformation eine Positionsinformation bereit. Diese Positionsinformation gibt jeweils an, an welcher Position einer anzuzeigenden Transaktionsdatenzeichenkette ein aktuell mittels eines des Hervorhebens eines zugeordneten Markierungselements angezeigtes Zeichen des Zeichenfeldes anzuordnen ist. Auf diese Weise wird es für den Nutzer einfacher, die angezeigten Zeichen zu der Transaktionsdatenzeichenkette zusammenzusetzen. Er muss sich nicht während des Anzeigens verschiedener Zeichen seinerseits die Position des Zeichens in der anzuzeigenden Zeichenkette - beispielsweise durch Mitzählen, Mitschreiben oder in ein geeignetes Gerät eingeben - merken, sondern bekommt zu jedem Zeichen die Position des Zeichens in der Transaktionsdatenzeichenkette mit angezeigt - mittels der entsprechenden Dekodierungsinformation.

Hierzu kann der Datenträger beispielsweise ein Positionsfeld umfassen, welches für jede Position der Transaktionsdaten ein Feld vorsieht. Beim Anzeigen des Zeichens, welches an der entsprechenden Position der anzuzeigenden Transaktionsdaten anzuordnen ist, kann als Dekodierungsinformation dieses Feld, eventuell inklusive der Felder zu vorhergehenden Positionen, optisch hervorgehoben werden. Die entsprechende Positionsinformation kann auch akustisch oder taktil ausgegeben werden, indem vorstehend beschriebene Signale beispielsweise entsprechend oft wiederholt werden. Optisch kann eine Positionsinformation, wie vorstehend bereits beschrieben, auch mittels einer Farbkodierung erfolgen. Die Dekodierungsinformationseinrichtung kann nun ein beliebiges, dem Nutzer nicht bekanntes Farbschema vorgeben, nach dem die farbige Anzeige der Zeichen des Zeichenfeldes zu dekodieren ist. Dazu umfasst der Datenträger ein Positionsfeld, dessen Elemente jeweils mittels verschiedener Farben hervorgehoben werden können. Diese Ausführungsform zeigt, dass mittels der zusätzlichen Dekodierungsinformation die Kodiertingsmöglichkeiten erheblich erweitert werden - hier von einem festen zu beliebigen, wechselnden Farbschemata zur Positionskodierung der Zeichen der Transaktionsdatenzeichenkette.

Vorzugsweise ist der erfindungsgemäße Datenträger eingerichtet, verschiedene Arten von Transaktionsdaten anzuzeigen. Dies können beispielsweise persönliche Identifikationsnummern (PINs) oder Transaktionsnummern (TANs) sein.. Auch das Anzeigen mittels des Datenträgers erzeugter Daten, beispielsweise Einmalpasswörter (OTPs) und Kreditkartenverifikationsnummern (CVV2, CVC2), kann vorgesehen sein. Um dem Nutzer anzuzeigen, welche Art von Transaktionsdaten aktuell angezeigt wird, bzw. dem Nutzer eine Auswahl der Anzeigen entsprechender Daten zu ermöglichen, kann gleichfalls die Dekodierungsinformationseinrichtung entsprechende Dekodierungsinformationen vorgeben. Zum Umschalten zwischen verschiedenen Dekodierungsinformationen - im Falle einer Auswahl - oder zum Einleiten der aktuellen Anzeige einer ausgewählten Art von Transaktionsdaten, kann erneut die beschriebene Schaltvorrichtung verwendet werden.

Zum Speichern von statischen, anzuzeigenden Transaktionsdaten sowie zum Erzeugen von beispielsweise lediglich einmalig verwendeten Transaktionsdaten umfasst der Datenträger vorzugsweise einen integrierten Schaltkreis mit einem Speicher und einem Prozessor. Der Schaltkreis ist weiter eingerichtet, die verschiedenen Ausgabeelemente, beispielsweise die Leuchtdioden oder akustische Bauteile, erfindungsgemäß zu steuern, insbesondere, um ein optisches Hervorheben der Markierungselemente zu bewirken.

Das Zeichenfeld des Datenträgers kann auf verschiedene Weise ausgebildet sein. Die Auswahl der Zeichen des Zeichenfeldes erfolgt nach den Erfordernissen der potentiell anzuzeigenden Transaktionsdaten, d.h. das Zeichenfeld umfasst vorzugsweise zumindest alle solchen Zeichen, die Bestandteil einer anzuzeigenden Transaktionsdatenkette sein können. Gewöhnlich sind dies alphanumerische Zeichen. Darüber hinaus können weitere Zeichen vorgesehen sein, beispielsweise auch zum Kodieren der zusätzlichen Kodierungsinformation. Vorzugsweise umfasst das Zeichenfeld ein die Ziffern 0 bis 9 umfassendes Ziffernfeld. Die Ziffern können dabei linear angeordnet sein. Die Reihenfolge der Ziffern kann linear aufsteigend, linear absteigend oder aber verwürfelt, d.h. zufällig angeordnet, sein. Eine lineare Anordnung der Ziffern macht das Zuordnen von Markierungselementen zu den Zeichen einfach und eindeutig, indem die Markierungselemente, ebenfalls linear angeordnet, beispielsweise räumlich leicht versetzt, auf dem Datenträger angeordnet werden können. Das Ziffernfeld kann aber beispielsweise auch in Form eines geordneten Ziffernblocks, wie er z.B. von der Tastatur eines Mobilfunkendgeräts bekannt ist, angeordnet werden. Andere Arten der Anordnung der Zeichen des Zeichenfeldes, beispielsweise kreisförmig, sind möglich. Prinzipiell können die Zeichen des Zeichenfeldes sowie die den Zeichen jeweils zugeordneten Markierungselemente auf dem Datenträger an beliebigen Stellen angeordnet sein, solange ein Anzeigen einzelner Zeichen wie vorstehend beschrieben möglich und für den Nutzer erkennbar ist.

Ein erfindungsgemäßes Transaktionssystem schließlich umfasst ein Datenverarbeitungsendgerät zum Initiieren einer Transaktion durch Eingabe von Transaktionsdaten in das Datenverarbeitungsendgerät und Weiterleiten der Transaktionsdaten. Weiter umfasst das System eine Datenverarbeitungseinrichtung zum Verarbeiten der weitergeleiteten Transaktionsdaten sowie einen erfindungsgemäßen portablen Datenträger zum Anzeigen der einzugebenden Transaktionsdaten. Als Datenverarbeitungsendgerät kann beispielsweise ein Mobilfunkendgerät, ein Smartphone, ein PDA, ein Netbook, ein Notebook, einen PC oder dergleichen zum Einsatz kommen. Eine durchzuführende Transaktion kann beispielsweise eine Bestell- oder Bezahltransaktion im Rahmen eines Fernabsatzgeschäfts oder eine Banking-Transaktion sein. Eine vorstehend genannte Datenverarbeitungseinrichtung ist also beispielsweise ein Server einer Bank oder eines Web-Shops. Entsprechende Transaktionsdaten sind beispielsweise Passwörter, PINs, TANs, OTPs, dynamische Kreditkartenverifikationsnummern (CVV2, CVC2) und dergleichen.

Im Folgenden wird die vorliegende Erfindung mit Bezug auf die anliegenden Zeichnungen beispielhaft beschrieben. Darin zeigen:
- Figuren 1A und 1B: zwei bevorzugte Ausführungsformen eines erfindungsgemäßen Datenträgers und
- Figur 2: Verfahrensschritte einer bevorzugten Ausführungsform des erfindungsgemäßen Verfahrens zum Anzeigen von Transaktionsdaten mittels entsprechender Datenträger.

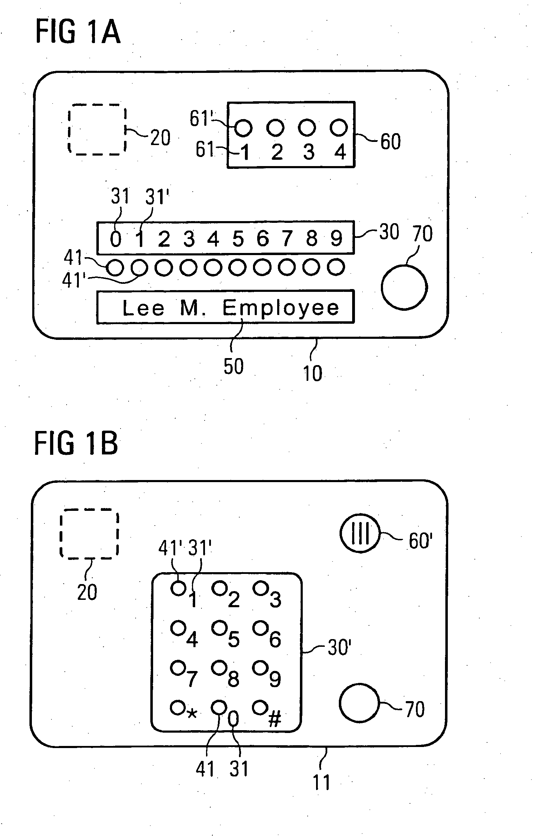

Mit Bezug auf die Fig. 1A und 1B umfasst ein portabler Datenträger 10, 11, welche hier exemplarisch jeweils als Chipkarte ausgebildet sind, einen - in den Figuren lediglich angedeuteten - in einen Kartenkörper eingebetteten integrierten Schaltkreis 20, ein Zeichenfeld 30, welches verschiedenen Zeichen 31, 31' umfasst, weiterhin verschiedene Markierungselemente 41, 41', eine Personalisierungsinformation 50 (nur Datenträger 10 in Fig. 1A), eine Dekodierungsinformationseinrichtung 60 sowie eine Schaltvorrichtung 70.

Der Schaltkreis 20 umfasst einen ROM-Speicher, einen wiederbeschreibbaren FLASH- oder EEPROM-Speicher, einen flüchtigen RAM-Speicher sowie einen Prozessor. Der Datenträger 10, 11 wird durch ein in dem ROM- oder FLASH-Speicher gespeichertes und auf dem Prozessor ausführbares Betriebssystem gesteuert. In dem FLASH-Speicher können weitere Daten gespeichert sein, beispielsweise als Transaktionsdaten gespeicherte Geheimdaten, z.B. eine PIN oder dergleichen, sowie auf dem Datenträger 10, 11 ausführbare Applikationen, beispielsweise zum Erzeugen von Transaktionsdaten, z.B. einem Einmalpasswort (OTP).

Der Datenträger 10, 11 wird über eine eigene integrierte Energieversorgung in Form einer Batterie (nicht gezeigt) betrieben. Andere Arten der Energieversorgung, beispielsweise über eine Antenne oder dergleichen, sind möglich.

Abhängig davon, ob der Datenträger 10, 11, wie im dargestellten Beispiel, lediglich zum Erzeugen und Anzeigen von Transaktionsdaten vorgesehen ist oder aber weitere Funktionalitäten bereitstellt, beispielsweise als Kredit- oder Debitkarte, als Identitätsnachweis, als Zugangsberechtigung oder dergleichen, kann der Datenträger 10 weitere Komponenten umfassen. Zur kontaktlosen oder kontaktbehafteten Datenkommunikation können verschiedene Schnittstellen, beispielsweise ein Kontaktfeld oder eine Antenne, vorgesehen sein. Neben der Personalisierungsinformation 50 (Fig. 1A) in Form des Namens des Nutzers des Datenträgers 10 kann dieser weitere Informationen umfassen, die auf den Datenträgerkörper aufgebracht oder in einem Speicher des Datenträgers 10, 11 gespeichert sind, beispielsweise über eine den Datenträger 10, 11 ausgebende Stelle oder dergleichen.

Das Zeichenfeld 30 des Datenträgers 10 aus Fig. 1A ist als Ziffernfeld ausgebildet. Es umfasst die Ziffern 0 bis 9, welche linear aufsteigend angeordnet sind. Andere Anordnungen der Ziffern sind möglich, beispielsweise absteigend oder verwürfelt, d.h. zufällig angeordnet. Auch die Anordnung der Zeichen 31, 31' des Zeichenfeldes 30 kann von einer linearen Anordnung abweichen. Möglich ist beispielsweise eine Anordnung in einem Kreis oder, wie mit Bezug auf den Datenträger 11 in Fig. 1B dargestellt, als Zeichenfeld 30' in Form eines geordneten Ziffernblocks. Dieser umfasst außer den Ziffern 0 bis 9 noch die Sonderzeichen "*" und "#".

Wesentlich ist, dass das Zeichenfeld 30, 30' zumindest diejenigen Zeichen 31, 31' umfasst, die als Zeichen anzuzeigender Transaktionsdaten vorkommen können. In der Regel sind dies die Ziffern 0 bis 9, aber auch Buchstaben oder in seltenen Fällen Sonderzeichen, können bedarfsweise vom Zeichenfeld 30, 30' umfasst sein. Solche Zeichen, die in der Regel nicht Teil von Transaktionsdaten sind, beispielsweise die Sonderzeichen "*" und "#", können, wie nachfolgend beschrieben, anderweitig - zum Bereitstellen von Dekodierungsinformation - sinnvoll eingesetzt werden.

Die Zeichen 31, 31' des Zeichenfeldes 30, 30' werden in konventioneller Weise unveränderbar auf den Datenträger 10,11 aufgebracht, beispielsweise aufgedruckt, eingeprägt, mittels Laser eingeschrieben oder dergleichen.

Jedem Zeichen 31, 31' des Zeichenfeldes 30, 30' ist ein Markierungselement 41, 41' eindeutig zugeordnet. In den in Fig. 1A, 1B gezeigten Beispielen liegen ein einem Zeichen 31 zugeordnetes Markierungselement 41 in dem Datenträger 10, 11 direkt angrenzend an das jeweilige Zeichen 31, beispielsweise direkt unterhalb, wie im Datenträger 10 in Fig. 1A, oder leicht seitlich oberhalb, wie im Datenträger 11 in Fig. 1B. Wichtig ist dabei lediglich, dass die entsprechende Zuordnung eines Markierungselements 41 zu einem Zeichen 31 eindeutig und leicht erkennbar ist.

Die Markierungselemente 41, 41' sind optisch hervorhebbar ausgebildet, d.h. eine Steuerapplikation des Datenträgers 10, 11, beispielsweise als Komponente des Betriebssystems, ist eingerichtet, ein oder mehrere der Markierungselemente 41, 41' in vorgegebener Weise temporär optisch hervorzuheben, d.h. ihr Erscheinungsbild in von außerhalb des Datenträgers 10,11 erkennbarer, von dem Erscheinungsbild gleichzeitig nicht hervorgehobener Markierungselementen 41, 41' unterscheidbar zu verändern. Dazu umfasst der Datenträger 10, 11 in den gezeigten Beispielen Leuchtdioden (nicht gezeigt), welche in den Datenträgerkörper integriert und von der Steuerapplikation gesteuert sind. Die Leuchtdioden können Licht emittieren, welches an der Position einzelner Markierungselement 41, 41' von außerhalb des Datenträgers 10, 11 sichtbar ist. Ein Markierungselement 41, 41' wird also durch einen zumindest semitransparenten Bereich des Datenträgerkörper und der Datenträgeroberfläche gebildet, wobei dieser Bereich mittels einer oder mehrerer Leuchtdioden im Datenträgerkörper beleuchtet und dadurch optisch hervorgehoben werden kann.

Andere technische Ausgestaltungen der Markierungselemente sind möglich. Dazu ist es lediglich erforderlich, Bereiche des Datenträger 10, 11, welche von außerhalb des Datenträgers 10,11 sichtbar sind, derart auszubilden, dass eine temporäre, optisch erkennbare Änderung der Bereiche bewirkt werden kann. Denkbar ist beispielsweise eine Veränderung der Transparenzeigenschaften begrenzter, die Markierungselemente darstellender Bereiche des Datenträgerkörpers, welche zumindest im Durchlicht leicht erkennbar sein sollten.

In den gezeigten Beispielen wird jeweils genau ein Markierungselement 41 durch eine diesem Markierungselement 41 zugeordnete Leuchtdiode optische hervorgehoben, wobei alle Leuchtdioden Licht gleicher Farbe emittieren. Die Leuchtdioden sind dabei direkt unterhalb des jeweiligen Markierungselements 41, d.h. direkt unterhalb des entsprechenden Bereichs der Datenträgeroberfläche, angeordnet. Es ist auch möglich, das von einer Leuchtdiode emittierte Licht über geeignete Lichtleiter zu einem oder mehreren Markierungselementen 41, 41' zu leiten, so dass die Leuchtdioden nicht notwendigerweise direkt bei den Markierungselementen 41, 41', deren Hervorheben sie unterstützen, angeordnet sein müssen. Somit ist es möglich, lediglich eine Leuchtdiode zum Hervorheben mehrerer Markierungselemente 41, 41' vorzusehen. Gleichfalls können mehrere Leuchtdioden, von denen jede geeignet ist, ein Markierungselement zu beleuchten, vorgesehen sein. Letztgenannte Ausführungsform kann pro Markierungselement 41 insbesondere eine Mehrzahl von Leuchtdioden umfassen, welche jeweils Licht einer unterschiedlichen Farbe emittieren, d.h. das betreffende Markierungselement 41 kann sogar auf verschiedene Weisen - verschiedenfarbig - optisch hervorgehoben werden. Farbeffekte können auch dadurch erzielt werden, dass in die genannten Lichtleiter Farbfilter geschaltet werden. Auf diese Weise kann beispielsweise ein Markierungselement 41, welches zusammen mit anderen Markierungselementen 41' von lediglich einer Leuchtdiode über verschiedene Lichtleiter beleuchtet wird, farblich unterschieden, und damit optisch hervorgehoben werden.

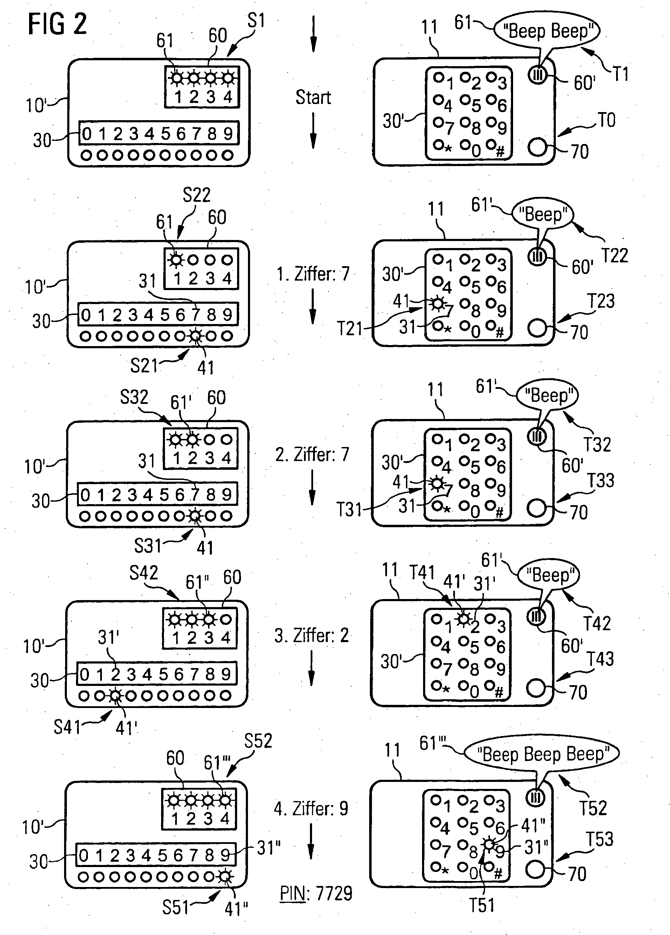

Die Zuordnung von Zeichen 31, 31' des Zeichenfeldes 30 zu optisch hervorhebbaren Markierungselementen 41, 41' dient der einfachen Kodierung anzuzeigender Transaktionsdaten PIN (vgl. Fig. 2). Ein optisches Hervorheben eines Markierungselements 41 ist mit dem Anzeigen des dem Markierungselement 41 eindeutig zugeordneten Zeichens 31 des Zeichenfeldes 30 gleichzusetzen. Wird beispielsweise das Markierungselement 41 optisch hervorgehoben, wird dadurch das Zeichen 31, die "0", welche dem Markierungselement 41 zugeordnet ist, angezeigt. Auf diese Weise können beliebige Transaktionsdaten, welche über einem solchen Alphabet gebildet werden können, das lediglich die Zeichen 31, 31' des Zeichenfeldes 30 umfasst, angezeigt werden. Die anzuzeigenden Transaktionsdaten können dabei jedes der Zeichen 31, 31' in beliebiger Anzahl und Anordnung umfassen. Die Art der Kodierung der Transaktionsdaten kann dabei variieren. Verschiedene Kodierungsarten werden mit Bezug auf Fig. 2 detailliert beschrieben.

Die Datenträger 10, 11 umfassen weiterhin eine Dekodierungsinformationseinrichtung 60, 60'. Diese dient in beiden Fällen dazu, zusätzliche Dekodierungsinformation zum Dekodieren anzuzeigender Transaktionsdaten bereitzustellen. D.h. neben dem Anzeigen von Zeichen 31, 31' des Zeichenfeldes 30 durch optisches Hervorheben entsprechender, den Zeichen jeweils zugeordneter Markierungselemente 41, 41', kann die Kodierung von Transaktionsdaten und vor allem die Dekodierung angezeigter, kodierter Transaktionsdaten durch Angabe zusätzlicher Information vereinfacht werden. Auf diese Weise kann der Nutzer des Datenträgers 10, 11 bei der Dekodierung des angezeigten Transaktionsdaten unterstützt werden. Eine Dekodierungsinformation kann auf beliebige geeignete Weise dargestellt und wahrnehmbar gemacht werden. Neben nachfolgend beschriebener optisch oder akustisch wahrnehmbarer Kodierungsinformation ist es möglich, Kodierungsinformation auch derart auszugeben, dass sie durch den Tastsinn wahrnehmbar ist, beispielsweise indem der Datenträger, um eine Information auszugeben, temporär vibriert

Die Dekodierungsinformationseinrichtung 60 des Datenträgers 10 in Fig. 1 ist als Positionsfeld ausgebildet. Dieses umfasst vier Positionselemente 61, welche - wie die Markierungselemente - mittels Leuchtdioden optisch hervorgehoben werden können. Wie mit Bezug auf Fig. 2 nachstehend detailliert beschrieben, dient diese Art der Dekodierungsinformationseinrichtung 60 dazu, beim Anzeigen eines Zeichens 31 gleichzeitig anzugeben, an welcher Position dieses Zeichen 31 innerhalb einer darzustellenden (hier vierstelligen) Transaktionsdatenzeichenkette anzuordnen ist. Eine einfachere (nicht gezeigte) Ausführungsform einer optischen Dekodierungsinformationseinrichtung könnte lediglich ein Feld umfassen, welches von der Steuerapplikation gesteuert, in vorgegebener Weise temporär hervorgehoben werden könnte.

Eine ähnliche, eingeschränkte Funktionalität stellt die Dekodierungsinformationseinrichtung 60' des Datenträgers 11 aus Fig. 1B bereit. Diese umfasst ein akustisches Bauteil, welches eingerichtet ist, einfache Töne variabler Länge auszugeben. Ein ausgegebener Ton einer gewissen Länge kann gleich einem entsprechend lange optisch hervorgehobenen Feld interpretiert werden. Ausgabe verschiedener Töne kann ebenfalls vorgesehen sein.

Der Datenträger 10, 11 umfasst schließlich eine Schaltvorrichtung 70, welche hier als Schnappscheibe ausgebildet ist. Ein Nutzer des Datenträgers 10, 11 kann damit beispielsweise den Datenträger 10, 11 zum Anzeigen von Transaktionsdaten aktivieren, zwischen verschiedenen, nachfolgend beschriebenen Modi umschalten, verschiedene Auswahlen treffen oder auch den Datenträger nach einer erfolgreichen Anzeige von Transaktionsdaten deaktivieren. Es sind Ausführungsformen möglich, in welchen eine Schaltvorrichtung 70 verzichtbar ist (vgl. Datenträger 10' in Fig. 2). Ein Aktivieren des betreffenden Datenträgers kann dann in anderer Weise geschehen, beispielsweise gesteuert über einen Dehnungssensor (Aktivierung der Anzeigefunktion mittels Biegung der Karte) (nicht gezeigt) oder dergleichen.

Im Folgenden werden mit Bezug auf Figur 2 Verfahrensschritte zum Anzeigen von Transaktionsdaten mittels der Datenträger aus Fig. 1A bzw. 1B dargestellt. Beispielhaft wird dabei eine vierstellige PIN angezeigt. Andere Arten von Transaktionsdaten, beispielsweise TANs, OTPs, CVVs und dergleichen sind in analoger Weise darstellbar. Manche dieser Transaktionsdaten sind bereits in der anzuzeigenden Form in dem Datenträger gespeichert, andere werden erst zum Anzeigen erzeugt.

Der Datenträger 10' in Figur 2 entspricht im Wesentlichen dem Datenträger 10 aus Fig. 1, mit dem Unterschied, dass er keine Schaltvorrichtung 70 und keine Personalisierungsinformation 50 umfasst.

Nachdem die Datenträger 10', 11 zum Anzeigen von Transaktionsdaten aktiviert worden sind, beispielsweise durch Betätigen des Schaltvorrichtung 70 des Datenträgers 11 in einem Schritt T0, gibt die Dekodierungsinformationseinrichtung 60, 60' jeweils ein Signal aus, welches anzeigt, dass nun mit dem Anzeigen der Transaktionsdaten begonnen wird. Die entsprechende Einrichtung 60 des Datenträgers 10' zeigt dies in Schritt S1 dadurch an, dass alle vier Positionselemente "1" bis "4" gleichzeitig für einen gewissen Zeitraum leuchten, ohne dass eines der Markierungselemente 31 optisch hervorgehoben wird. In einem entsprechenden Schritt T1 gibt die akustische Dekodierungsinformationseinrichtung 60' des Datenträgers 11 zwei kurze Töne von sich, welche ebenfalls den Beginn der Transaktionsdatenanzeige signalisieren.

Der Datenträger 10' zeigt dann - nach einer gewissen Zeit - automatisch das erste Zeichen der Transaktionsdaten, eine "7", dadurch an, dass das Markierungselement 41, welchem dem Zeichen 31- der "7" - zugeordnet ist, für einen gewissen Zeitraum hervorgehoben wird. Gleichzeitig leuchtet das erste Positionselement 61 der Dekodierungsinformationseinrichtung 60. Dadurch wird kodiert, dass die "7" das ersten Zeichen der Transaktionsdaten darstellt. Dabei kann das Hervorheben des Markierungselements 41 kontinuierlich andauernd oder "blinkend" erfolgen oder, vorzugsweise, zuerst "blinkend" und anschließend - für eine gewisse Zeitspanne - andauernd. Auf diese Weise wird ein Nutzer deutlich auf das Anzeigen einer neuen Ziffer aufmerksam gemacht.

Die Anzeige des ersten Zeichen 31, der "7", erfolgt mit dem Datenträger 11 in Schritt T21 in analoger Weise, durch optisches Hervorheben des diesem Zeichen 31 zugeordneten Markierungselements 41. Allerdings fällt eine zusätzliche Dekodierungsinformation 61, welche in Schritt T22 lediglich aus einem von der Dekodierungsinformationseinrichtung 60' einmalig ausgegebenen kurzen Ton besteht, etwas einfacher aus. Der Nutzer wird dadurch auf die Anzeige eines neuen Zeichens aufmerksam gemacht, muss aber im Laufe des Verfahrens selbst verfolgen, zu welcher Position in den Transaktionsdaten dieses Zeichen gehört. Es ist allerdings möglich, auch akustisch eine Positionsinformation geeignet zu kodieren, beispielsweise durch entsprechend häufige Wiederholung des Signaltons.

Das zweite Zeichen 31 der Transaktionsdatenzeichenkette wird durch den Datenträger 10' in Schritt S31 automatisch nach einer vorgegebenen Zeitspanne in genau der gleichen Weise angezeigt wie das erste Zeichen. Allerdings unterscheidet sich die in Schritt S32 nun angezeigte Dekodierungsinformation 61' von der Dekodierungsinformation 61 (Schritt S22) beim Anzeigen des ersten Zeichens darin, dass nun die ersten beiden Positionselemente "1" und "2" in dem Positionsfeld 60 optisch hervorgehoben werden. Alternativ könnte, um anzudeuten, dass aktuell das zweite Zeichen 31' der Transaktionsdaten angezeigt wird, auch lediglich das zweite Positionselement "2" beleuchtet werden.

Abweichend davon muss der Nutzer des Datenträgers 11 zuerst in Schritt T23 die Schaltvorrichtung 70 betätigen, um den Datenträger 11 zu veranlassen, mit dem Anzeigen des zweiten Zeichens 31 in den Schritte T31, begleitet durch die zusätzliche Dekodierungsinformation 61' in Form des Signaltons in Schritt T32, fortzufahren. Auf diese Weise kann verhindert werden, dass durch automatisches Fortfahren ein eventuell zeitweilig abgelenkter Nutzer die Anzeige eines weiteren Zeichens 31 verpasst. Alternativ könnte allerdings auch der Datenträger 11, wie der Datenträger 10', automatisch jeweils zum Anzeigen des nächsten Zeichen fortschreiten. Auf der anderen Seite könnte anstelle des Datenträgers 10' der Datenträger 10 aus Fig. 1A verwendet werden, welcher ebenfalls ein Weiterschalten mittels der Schaltvorrichtung 70 zum Anzeigen des folgenden Zeichens vorsieht.

Die Anzeige des dritten und vierten Zeichens der Transaktionsdaten, der "2" und der "9", in den Schritten S41, S42, S51, S52 für den Datenträger 10' bzw. T33, T41, T42, T43, T51, T52, T53 für den Datenträger 11 verläuft analog. Zu bemerken ist, dass sich im Zusammenhang mit den Datenträger 11 die Dekodierungsinformation 61"' nach dem Anzeigen des letzten Zeichens von den bisherigen Dekodierungsinformationen abhebt, als dreifacher Signalton, um anzudeuten, dass die Anzeige der Transaktionsdaten nun abgeschlossen ist.

Automatisch oder auf Anforderung des Nutzers kann die Anzeige der Transaktionsdaten PIN nun, z.B. zu Kontrollzwecken, wiederholt werden. Es ist ebenso möglich, dass sich der Datenträger 10, 11 automatisch deaktiviert, nachdem der Nutzer eine Wiederholung der Anzeige abgelehnt oder nicht angefordert hat. Die Art der Anzeige kann bei einer Kontrollwiederholung von der ersten Art der Anzeige im ersten Durchlauf abweichen. Es kann beispielsweise im Zusammenhang mit den Datenträger 11 auf ein Weiterschalten zwischen den Zeichen mittels der Schaltvorrichtung 70 verzichtet werden. Ebenso kann allgemein die Dauer bzw. die Häufigkeit (bei "blinkender" Anzeige) der Anzeige eines Zeichens reduziert sein.

Prinzipiell kann bei einem Verfahren zum Anzeigen der Transaktionsdaten (PIN, OTP, TAN, CVV2), wie es im Zusammenhang mit den Datenträger 10' beschrieben worden ist, auf die Dekodierungsinformation verzichtet werden. Wird jedes Zeichen der Transaktionsdaten beispielsweise zuerst einen gewissen, längeren Zeitraum andauernd, anschließend einige Male "blinkend" mit jeweils kürzerer Dauer hervorgehoben, so erkennt der Nutzer, auch ohne zusätzliche Dekodierungsinformation, wenn dass nächste Zeichen angezeigt wird. Dies gilt auch dann, wenn dieses Zeichen identisch zum ersten Zeichen ist. D.h. es gibt zahlreiche geeignete Kodierungsverfahren, mittels derer eine eindeutige und leicht dekodierbare Anzeige beliebiger Transaktionsdaten in oben beschriebener Weise auch ohne Bereitstellung zusätzlicher Dekodierungsinformationen möglich ist.

Eine alternative Art einer zusätzlichen Dekodierungsinformation kann dadurch bereitgestellt werden, dass - wie erwähnt - verschiedenfarbige Leuchtdioden eingesetzt werden, um die Markierungselemente optisch - verschiedenartig - hervorzuheben. Zur Darstellung oben beschriebener, vierstelliger Transaktionsdaten kann beispielsweise ein festes Farbkodierungsschema vorgegeben werden, welches dem Nutzer bekannt ist. Dieses sagt z.B. aus, dass das erste Zeichen der Transaktionsdaten in roter Farbe hervorgehoben wird, das zweite in grüner, das dritte in weißer und das vierte in blauer Farbe. Wenn nun der Datenträger derart mit verschiedenfarbigen Leuchtdioden bzw. Farbfiltern ausgestattet ist, dass jedes Markierungselement prinzipiell in jeder dieser vier Farben hervorhebbar ist, so kann eine Kodierung der Transaktionsdaten, beispielsweise wieder der Zeichenkette "7729", derart erfolgen, dass nacheinander die Zeichen "7" in rot, "7" in grün, "2" in weiß und "9" in blau hervorgehoben werden. Umfasst die anzuzeigende Transaktionsdatenzeichenkette lediglich paarweise verschiedene Zeichen, so können diese - entsprechend farblich kodiert - sogar gleichzeitig angezeigt werden.

In Weiterbildung dieser Ausführungsform kann eine Dekodierungsinformationseinrichtung 60 (wie im Datenträger 10) bereitgestellt werden, in welcher die Positionselemente 61, 61', 61" und 61"' ebenfalls jeweils in einer der vier Farben beleuchtet werden können. Damit kann dann in einem ersten Schritt ein variables Farbschema definiert werden, indem beispielsweise die Positionselemente in blau ("1"), grün ("2"), weiß ("3") und rot ("4") hervorgehoben werden. Anschließend kann die Kodierung der Transaktionsdaten, wie vorstehend beschrieben, nach diesem definierten Farbschema erfolgen. Der Nutzer muss sich also kein festes Farbschema merken und das Dekodieren der angezeigten Transaktionsdaten kann dadurch vereinfacht werden, dass das aktuelle Farbschema während der Anzeige der Transaktionsdaten angezeigt bleiben kann.

Eine entsprechend eingerichtete Dekodierungsinformationseinrichtung 60, 60' kann weiterhin dazu verwendet werden, beispielsweise vor und/ oder nach dem Anzeigen von Transaktionsdaten einer bestimmten Art, die Art der anzuzeigenden bzw. angezeigten Transaktionsdaten anzugeben. Dies ist insbesondere für solche Datenträger beschriebener Art sinnvoll, die beispielsweise sowohl eine PIN also auch ein OTP anzeigen können. Zu diesem Zweck können alternativ oder zusätzlich auch solche Zeichen des Zeichenfeldes 30 verwendet werden, die prinzipiell nicht in anzuzeigenden Transaktionsdaten vorkommen. Beispielsweise könnte eine Anzeige einer PIN durch den Datenträger 11 mit dem Anzeigen des Sonderzeichens "*" eingeleitet werden, wohingegen die Anzeige eines OTP mit der Anzeige einer "#" beginnt.

## Patentansprüche

1. Portabler Datenträger (10; 10'; 11) zum Anzeigen von Transaktionsdaten (PIN, OTP, TAN, CVV2), umfassend
- ein unterschiedliche Zeichen (31; 31') umfassendes Zeichenfeld (30; 30'), wobei jedem Zeichen (31; 31') des Zeichenfeldes (30; 30') ein optisch hervorhebbares Markierungselement (41; 41') des Datenträgers (10;10';11) zugeordnet ist, welches räumlich benachbart zu dem Zeichen (31; 31') an der Datenträgeroberfläche angeordnet wird; und
- einen integrierten Schaltkreis (20), welcher eingerichtet ist, die anzuzeigenden Transaktionsdaten (PIN, OTP, TAN, CVV2) zu erzeugen;
wobei der Datenträger (10;10';11) eingerichtet ist Zeichen (31; 31') des Zeichenfeldes (30; 30') durch optisches Hervorheben des jeweils zugeordneten Markierungselements (41; 41') anzuzeigen, und
wobei eine die Transaktionsdaten (PIN, OTP, TAN, CVV2) darstellende Zeichenkette aus Zeichen (31; 31') des Zeichenfeldes (30; 30') besteht,
**dadurch gekennzeichnet, dass**
der Datenträger (10;10';11) Leuchtdioden umfasst, welche eingerichtet sind, die Markierungselemente (41; 41') optisch hervorzuheben,
dass der Datenträger (10;10';11) eine vorgegebene Kodierung der Transaktionsdaten (PIN, OTP, TAN, CVV2) dadurch umsetzt, dass die anzuzeigenden Transaktionsdaten durch Anzeigen der den kodierten Transaktionsdaten entsprechenden Zeichenkette durch geeignetes sequentielles und temporäres optisches Hervorheben der jeweils zugeordneten Markierungselemente (41; 41') kodiert angezeigt werden, und
dass die Anzeige der Zeichenkette dabei derart erfolgt, dass ein Nutzer des Datenträgers (10;10';11) die Transaktionsdaten (PIN, OTP, TAN, CVV2) daraus ableiten oder dekodieren kann.

2. Datenträger (10;10';11) nach Anspruch 1, **gekennzeichnet durch** eine Dekodierungsinformationseinrichtung (60; 60'), welche eingerichtet ist, eine Dekodierungsinformation (61; 61'; 61"; 61'") zum Dekodieren der Transaktionsdaten (PIN) vorzugeben.

3. Datenträger (10;10';11) nach Anspruch 2, **dadurch gekennzeichnet, dass** die Dekodierungsinformationseinrichtung (60; 60') eingerichtet ist, die Dekodierungsinformation (61) optisch, vorzugsweise mittels Leuchtdioden, oder akustisch wahrnehmbar vorzugeben.

4. Datenträger (10;10';11) nach Anspruch 2 oder 3, **dadurch gekennzeichnet, dass** die Dekodierungsinformationseinrichtung (60; 60') eingerichtet ist, als Dekodierungsinformation eine Positionsinformation (61; 61'; 61"; 61"') bezüglich einer Position eines angezeigten Zeichens (31; 31') des Zeichenfeldes (30; 30') innerhalb der als Transaktionsdaten (PIN) anzuzeigenden Zeichenkette vorzugeben.

5. Datenträger (10;10';11) nach Anspruch 4, **dadurch gekennzeichnet, dass** der Datenträger (10;10';11) Leuchtdioden umfasst, welche eingerichtet sind, jeweils verschiedenfarbiges Licht zu emittieren.

6. Datenträger (10;10';11) nach Anspruch 1 oder 5, **dadurch gekennzeichnet, dass** der Datenträger (10;10';11) zum optischen Hervorheben eines einzelnen Markierungselements (41;'41') jeweils eine oder mehrere separate Leuchtdioden umfasst und/oder dass der Datenträger (10;10';11) zum optischen Hervorheben eines Markierungselements (41; 41') aus einer Mehrzahl von Markierungselementen (41; 41') jeweils eine Leuchtdiode umfasst, welche über Lichtleiter mit jedem der Markierungselemente (41; 41') der Mehrzahl der Markierungselemente (41; 41') verbunden ist.

7. Datenträger (10;10';11) nach einem der Ansprüche 1 bis 6, **dadurch gekennzeichnet, dass** das Zeichenfeld (30; 30') als Ziffernfeld (30) umfassend die Ziffern 0 bis 9 ausgebildet ist, wobei die Ziffern linear, vorzugsweise in zufälliger Reihenfolge, angeordnet sind oder geordnet in Form eines Ziffernblocks angeordnet sind.

8. Datenträger (10;10';11) nach einem der Ansprüche 1 bis 7, **dadurch gekennzeichnet, dass** der Datenträger (10;10';11) der integrierte Schaltkreis (20) eingerichtet ist ein optisches Hervorheben der Markierungselemente (41; 41) zu bewirken.

9. Datenträger (10;10';11) nach einem der Ansprüche 1 bis 8, **dadurch gekennzeichnet, dass** der Datenträger (10; 10'; 11) eine Schaltvorrichtung (70) umfasst, mittels welcher der Datenträger (10;10';11) aktivierbar ist und/oder mittels welcher zum aufeinander folgenden Anzeigen mehrerer Zeichen (31; 31') des Zeichenfeldes (30; 30') zwischen dem Hervorheben einzelner Markierungselemente (41; 41') umgeschaltet werden kann.

10. Datenträger (10;10';11) nach einem der Ansprüche 1 bis 9, **dadurch gekennzeichnet, dass** der Datenträger (10; 10'; 11) als Chipkarte ausgebildet ist.

11. Transaktionssystem, umfassend ein Datenverarbeitungsendgerät zum Initiieren einer Transaktion durch Eingabe von Transaktionsdaten (PIN) in das Dätenverarbeitungsendgerät und Weiterleitung der Transaktionsdaten (PIN), eine Datenverarbeitungseinrichtung zum Verarbeiten der weitergeleiteten Transaktionsdaten (PIN) sowie einen portablen Datenträger (10;10';11) zum Anzeigen der einzugebenden Transaktionsdaten (PIN) nach einem der Ansprüche 1 bis 10.

## Claims

1. A portable data carrier (10; 10'; 11) for displaying transaction data (PIN, OTP, TAN, CVV2), comprising
a character field (30; 30') comprising different characters (31; 31'), wherein to each character (31; 31') of the character field (30; 30') there is allocated an optically highlightable marking element (41; 41') of the data carrier (10; 10'; 11) which is arranged to be spatially adj acent to the character (31; 31') on the surface of the data carrier; and
an integrated circuit (20) that is adapted to generate the transaction data (PIN, OTP, TAN, CVV2) to be displayed;
wherein the data carrier (10; 10'; 11) is adapted to display characters (31; 31') of the character field (30; 30') by optically highlighting the respectively allocated marking element (41; 41'), and
wherein a character string representing the transaction data (PIN, OTP, TAN, CVV2) consists of characters (31; 31') of the character field (30; 30'),
**characterized in that**
the data carrier (10; 10'; 11) comprises light-emitting diodes that are adapted to optically highlight the marking elements (41; 41'),
the data carrier (10; 10'; 11) converts a predetermined encoding of the transaction data (PIN, OTP, TAN, CVV2) in such a fashion that the transaction data to be displayed are displayed in an encoded fashion by displaying the character string corresponding to the encoded transaction data by suitably sequentially and temporarily optically highlighting the respectively allocated marking elements (41; 41'), and
the displaying of the character string therein takes place in such a fashion that a user of the data carrier (10; 10'; 11) can derive or decode the transaction data (PIN, OTP, TAN, CVV2) therefrom.

2. The data carrier (10; 10'; 11) according to claim 1, **characterized by** a decoding information device (60; 60') adapted to specify decoding information (61; 61'; 61"; 61"') for decoding the transaction data (PIN).

3. The data carrier (10; 10'; 11) according to claim 2, **characterized in that** the decoding information device (60; 60') is adapted to specify the decoding information (61) in an optically, preferably by means of light-emitting diodes, or acoustically perceptible fashion.

4. The data carrier (10; 10'; 11) according to claim 2 or 3, **characterized in that** the decoding information device (60; 60') is adapted to specify as decoding information a position information item (61; 61'; 61 "; 61'") with reference to the position of a displayed character (31; 31') of the character field (30; 30') within the character string to be displayed as transaction data (PIN).

5. The data carrier (10; 10'; 11) according to claim 4, **characterized in that** the data carrier (10; 10'; 11) comprises light-emitting diodes adapted to emit respectively differently colored light.

6. The data carrier (10; 10'; 11) according to claim 1 or 5, **characterized in that** the data carrier (10; 10'; 11) comprises, for optically highlighting an individual marking element (41; 41'), respectively one or several separate light-emitting diodes and/ or that the data carrier (10; 10'; 11) comprises, for optically highlighting a marking element (41; 41') out of a plurality of marking elements (41; 41'), respectively one light-emitting diode connected via light guides with each of the marking elements (41; 41') out of the plurality of marking elements (41; 41').

7. The data carrier (10; 10'; 11) according to any of the claim 1 to 6, **characterized in that** the character field (30; 30') is formed as a numeric field (30) comprising the numbers 0 to 9, wherein the numbers are arranged linearly, preferably in random order, or are arranged in an ordered fashion in the form of a number pad.

8. The data carrier (10; 10'; 11) according to any of the claims 1 to 7, **characterized in that** the integrated circuit (20) is adapted to effect an optical highlighting of the marking elements (41; 41').

9. The data carrier (10; 10'; 11) according to any of the claims 1 to 8, **characterized in that** the data carrier (10; 10'; 11) comprises a switching device (70), by means of which the data carrier (10; 10'; 11) can be activated and/ or by means of which a switching can be effected between the highlighting of individual marking elements (41; 41') for the purpose of consecutively displaying several characters (31; 31') of the character field (30; 30').

10. The data carrier (10; 10'; 11) according to any of the claims 1 to 9, **characterized in that** the data carrier (10; 10'; 11) is configured as a chip card.

11. A transaction system, comprising a data-processing terminal for initiating a transaction by inputting transaction data (PIN) into the data-processing terminal and forwarding the transaction data (PIN), a data-processing device for processing the forwarded transaction data (PIN) and a portable data carrier (10; 10'; 11) for displaying the transaction data (PIN) to be input according to any of the claims 1 to 10.

## Revendications

1. Support de données portable (10; 10'; 11) destiné à l'affichage de données de transaction (PIN, OTP, TAN, CW2), comprenant
- une zone de caractères (30; 30') comprenant différents caractères (31 ; 31'), un élément de marquage (41; 41') pouvant être mis en valeur optiquement du support de données portable (10; 10'; 11) étant affecté à chaque caractère (31; 31') de la zone de caractères (30; 30') et étant disposé de manière spatialement avoisinante au caractère (31; 31') à la surface du support de données; et
- un circuit intégré (20) qui est équipé pour générer les données de transaction (PIN, OTP, TAN, CW2) à afficher,
le support de données (10; 10'; 11) étant équipé pour afficher des caractères (31; 31') de la zone de caractères (30; 30') par mise en valeur optique de l'élément de marquage (41; 41') respectivement affecté, et une chaîne de caractères représentant les données de transaction (PIN, OTP, TAN, CW2) se composant de caractères (31; 31') de la zone de caractères (30; 30'),
**caractérisé en ce que**
le support de données (10; 10'; 11) comprend des diodes luminescentes qui sont équipées pour mettre en valeur optiquement les éléments de marquage (41; 41'),
**en ce que** le support de données (10; 10'; 11) réalise un codage préfixé des données de transaction (PIN, OTP, TAN, CW2), ce qui a lieu **en ce que** les données de transaction à afficher sont affichées sous forme codée par affichage de la chaîne de caractères correspondante aux données de transaction codées, par mise en valeur optique séquentielle et temporaire appropriée des éléments de marquage (41; 41') respectivement affectés, et
**en ce que** l'affichage de la chaîne de caractères a lieu en l'occurrence de telle façon qu'un utilisateur du support de données (10; 10'; 11) peut déduire ou décoder à partir de cela les données de transaction (PIN, OTP, TAN, CW2).

2. Support de données (10; 10'; 11) selon la revendication 1, **caractérisé par** un dispositif d'information de décodage (60; 60') qui est équipé pour édicter une information de décodage (61; 61'; 61 "; 61'") pour le décodage des données de transaction (PIN).

3. Support de données (10; 10'; 11) selon la revendication 2, **caractérisé en ce que** le dispositif d'information de décodage (60; 60') est équipé pour édicter l'information de décodage (61) sous forme optique, de préférence au moyen de diodes luminescentes, ou sous forme acoustiquement perceptible.

4. Support de données (10; 10'; 11) selon la revendication 2 ou 3, **caractérisé en ce que** le dispositif d'information de décodage (60; 60') est équipé pour édicter en tant qu'information de décodage une information sur la position (61; 61'; 61 "; 61 "') concernant une position d'un caractère affiché (31; 31') de la zone de caractères (30; 30') au sein de la chaîne de caractères à afficher en tant que données de transaction (PIN).

5. Support de données (10; 10'; 11) selon la revendication 4, **caractérisé en ce que** le support de données (10; 10'; 11) comprend des diodes luminescentes qui sont équipées pour émettre de la lumière de couleur respectivement différente.

6. Support de données (10; 10'; 11) selon la revendication 1 ou 5, **caractérisé en ce que** le support de données (10; 10'; 11) comprend, pour la mise en valeur optique d'un seul élément de marquage (41; 41'), respectivement une ou plusieurs diodes luminescentes distinctes et/ou en ce que le support de données (10; 10'; 11) comprend, pour la mise en valeur optique d'un élément de marquage (41; 41') parmi une pluralité d'éléments de marquage (41; 41'), respectivement une diode luminescente qui, par l'intermédiaire de conduits de lumière, est reliée à chacun des éléments de marquage (41; 41') de la pluralité des éléments de marquage (41; 41').

7. Support de données (10; 10'; 11) selon une des revendications de 1 à 6, **caractérisé en ce que** la zone de caractères (30; 30') est réalisée sous forme de zone de chiffres (30) comprenant les chiffres de 0 à 9, les chiffres étant agencés linéairement, de préférence dans un ordre aléatoire ou étant ordonnés sous forme d'un pavé numérique.

8. Support de données (10; 10'; 11) selon une des revendications de 1 à 7, **caractérisé en ce que** le circuit intégré (20) est configuré pour provoquer une mise en valeur optique des éléments de marquage (41 ; 41').

9. Support de données (10; 10'; 11) selon une des revendications de 1 à 8, **caractérisé en ce que** le support de données (10; 10'; 11) comprend un dispositif de commutation (70) au moyen duquel le support de données (10; 10'; 11) est activable et/ou au moyen duquel, pour l'affichage consécutif de plusieurs caractères (31; 31') de la zone de caractères (30; 30'), une commutation peut être effectuée entre la mise en valeur d'éléments de marquage (41; 41') distincts.

10. Support de données (10; 10'; 11) selon une des revendications de 1 à 9, **caractérisé en ce que** le support de données (10; 10'; 11) est réalisé sous forme de carte à puce.

11. Système de transaction, comprenant un terminal de traitement de données destiné à l'initiation d'une transaction par entrée de données de transaction (PIN) dans le terminal de traitement de données et transfert des données de transaction (PIN), un dispositif de traitement de données destiné au traitement des données de transaction (PIN) transférée ainsi qu'un support de données portable (10; 10'; 11) destiné à l'affichage des données de transaction (PIN) à entrer selon une des revendications de 1 à 10.
